# FASCICULE DE BREVET EUROPEEN

(11) **EP 0 572 314 B1**
(45) Date de publication et mention de la délivrance du brevet: **06.03.1996**
(21) Numéro de dépôt: 93401336.8
(22) Date de dépôt: 25.05.1993
(51) Int. Cl.: B41M 1/34, C04B 41/52, C04B 41/45

(54) **Procédé de marquage et de décoration de céramiques**
Verfahren zum Kernzeichnen und Dekorieren von Keramik
Method of marking and decorating ceramics

(30) Priorité: 27.05.1992 FR 9206506
(43) Date de publication de la demande: 01.12.1993
(73) Titulaire: IMAJE, F-26500 Bourg les Valence (FR)
(72) Inventeur: de Saint Romain, Pierre, F-75116 Paris (FR)
(74) Mandataire: Dubois-Chabert, Guy

(56) Documents cités:
- EP-A- 0 379 674
- EP-A- 0 388 591

## Description

La présente invention se rapporte à un procédé de marquage et de décoration d'objets en matériau de type céramique avant leur cuisson à haute température, utilisant la technique du jet d'encre.

L'impression par jet d'encre est une technique bien connue permettant l'impression et le marquage de motifs variables à volonté sur toutes sortes d'objets, même non plans, sans contact avec lesdits objets, et à grande vitesse. Les systèmes d'impression sont du type "goutte à la demande" ou du type "jet continu". Les ingrédients composant les encres actuelles sont des produits organiques, résines avec des pigments ou des colorants, dispersés ou dissous dans des solvants plus ou moins volatils ou dans l'eau. Mais ces ingrédients ne résistent pas longtemps à des températures supérieures à 300°C.

Or, la fabrication de céramiques nécessite l'emploi de la technique du frittage ou de la fusion de poudre à hautes températures, allant de 500°C à plus de 1300°C. Ces poudres sont obtenues par coulage et/ou pressage de suspensions aqueuses plus ou moins concentrées, contenant au moins 20 à 30 % d'eau. Les objets ainsi produits sont ensuite séchés très lentement avant d'être portés à haute température, pour être cuits. Lorsque ces objets doivent être repérés ou marqués de façon indélébile dès les premiers stades de fabrication, les moules dans lesquels est coulée la céramique comportent eux-mêmes ces marques en relief qui vont s'imprimer dans l'épaisseur des objets avant cuisson. Dans le cas d'informations variables à marquer, comme la date de fabrication par exemple, l'intérieur des moules de pressage comporte des systèmes complexes, qui ne permettent cependant pas de dater très précisément les fabrications. Ainsi un marquage précis de toutes les informations assurant une gestion efficace de la qualité des objets ou produits fabriqués n'existe pas.

Pour la décoration des céramiques, il a été envisagé d'utiliser le procédé d'impression par jet d'encre (article de W.ROBERTS dans la revue "L'industrie céramique", N°827,5/88 et dans le journal Br.Cer.Soc. 87(1)1988), avec les mêmes pigments que ceux utilisés dans l'impression classique des céramiques. Cependant ce procédé pose un problème majeur difficile à résoudre, dû à la grande différence de densité entre le pigment et le liquide dans lequel il est dispersé, de sorte qu'il est difficile d'obtenir le pigment dans un état suffisamment divisé et de le maintenir en suspension jusqu'à l'impression. Pour s'affranchir de ce problème, il a été également envisagé le marquage par jet d'encre de pièces en matériau céramique à l'aide d'ingrédients solubles (demande de brevet européen Hüls Aktiengesellshaft EP-A-0 379 674, demandes de brevet japonais Tokyo Ink Mfg KK JP-A-62 250 081 et Inax Corp. JP-A-2 284 678, demande de brevet français 91 06284 au nom de la demanderesse). L'inconvénient des solutions proposées dans ces demandes vient de ce qu'elles doivent être appliquées sur des pièces céramiques entièrement sèches. En effet, sur des pièces humides les principes colorants ont tendance à se diluer dans l'eau contenue dans les pièces à marquer ou décorer, avant et pendant la longue période de séchage de ces pièces rendant illisible tout marquage après cuisson à haute température.

Le but de la présente invention est de rendre possible le marquage et la décoration, par jet d'encre, de produits en céramique contenant un pourcentage élevé d'eau et devant subir des traitements thermiques à des températures élevées, supérieures à 300°C.

Pour cela, l'objet de l'invention est un procédé de marquage et de décoration de céramiques humides par projection d'encre dont les composés responsables de la coloration après traitement thermique sont solubles dans l'eau, caractérisé en ce qu'il comporte les étapes suivantes :
- dépôt d'un liquide dit "primaire" sur la surface de la céramique humide à marquer, provoquant l'insolubilité, dans l'eau de la céramique, des composés de l'encre responsables de la coloration;
- dépôt, par projection sur la surface de la céramique recouverte du liquide primaire, de l'encre consistant en une solution d'au moins un sel minéral ou organo-métallique dans un solvant, ledit sel devenant insoluble dans l'eau de la céramique après son mélange avec le liquide primaire et formant au moins un oxyde coloré après chauffage à température élevée;
- séchage de la céramique imprimée;
- cuisson de la céramique séchée à une haute température, déterminée pour transformer lesdits sels en un ou plusieurs oxydes métalliques colorés.

Selon une autre caractéristique de l'invention, le liquide primaire est une solution basique provoquant la précipitation des sels minéraux ou organiques de l'encre pour donner des oxydes colorés par chauffage à température supérieure à 300°C.

D'autres caractéristiques et avantages de l'invention apparaîtront à la lecture de la description suivante des exemples non limitatifs de couples encre - liquide primaire.

La pièce à marquer ou décorer étant en céramique contenant 20 à 30% d'eau, le procédé selon l'invention consiste donc à déposer, préalablement à tout marquage, une couche d'un liquide dit "primaire", par tout moyen tel que projection, pulvérisation ou autre, dans le but d'empêcher la dissolution, dans l'eau de la céramique, de l'encre servant au marquage. Le procédé consiste ensuite à projeter un jet d'une encre réalisée à partir d'une solution d'au moins un sel minéral ou organo-métallique dans un solvant, responsable de la coloration de la pièce en donnant un ou des oxydes colorés après chauffage à très haute température. Ces sels minéraux ou organiques doivent de plus ne pas se dissoudre dans l'eau de la céramique humide et pour cela réagir chimiquement avec le liquide primaire, en précipitant ou en cristallisant. Ainsi cette précipitation des sels empêche la migration par dilution de ce composé de l'encre dans l'épaisseur de la céramique avant et lors de l'étape de séchage.

Le choix du liquide primaire dépend du type de métal du composé de l'encre ou de sa forme chimique; parmi les sels métalliques, on peut citer à titre non limitatif des produits dits minéraux tels que les chlorures, les sulfates, les nitrates, les carbonates et des produits dits organo-métalliques tels que les naphténates,les octates, les néodécanoates, les résinates et leurs dérivés. Etant donné que la réaction chimique entre un sel métallique et une base forte provoque la précipitation de l'hydroxyde du même métal, le liquide primaire est une solution basique. D'autres réactions de précipitation peuvent être aussi utilisées pour obtenir la fixation des métaux, par exemple avec une solution d'un polymère anionique soluble dans l'eau.

A titre d'illustration de l'invention, on peut citer un premier exemple de couple encre - liquide primaire utilisé lors du procédé de marquage. Sur une zone définie d'une tuile en céramique, contenant 15 à 20% d'humidité, récemment sortie d'une presse de mise en forme, on dépose à l'aide d'un pinceau une solution aqueuse de potasse à 25%, à raison de 4 mg de solution par cm². A l'aide d'une imprimante à jet d'encre, on réalise des motifs avec une encre qui est une solution de chlorure de cobalt à 25% dans l'éthanol. Le jet d'encre est déposé d'une part sur la première zone de la tuile recouverte de liquide primaire et d'autre part sur une seconde zone de la tuile non traitée. Cette tuile est ensuite séchée dans une étuve ventilée , à une température inférieure à 100°C, pendant plusieurs heures, afin de réduire le taux d'humidité à moins de 1%. Puis elle est chauffée à 1000°C pendant quatre heures afin d'être cuite et refroidie enfin lentement jusqu'à température ambiante. On observe la disparition complète du marquage à l'encre sur la seconde zone de la tuile n'ayant pas reçue de liquide primaire, mais par contre la parfaite lisibilité du marquage sur la première zone protégée.

Selon un second exemple, une tuile en céramique ayant subi un premier séchage pour réduire sa teneur en eau à environ 6%, est recouverte, sur une première zone, par pulvérisation d'une couche de liquide primaire composé d'une solution alcoolique à 10% de soude caustique, contenant un colorant organique dans le seul but de repérer la soude avant chauffage. Comme dans l'exemple précédent, un jet d'une encre composée d'une solution d'acétate de cobalt à 25% dans l'eau est projeté sur la première zone de la tuile et sur une autre zone non protégée par le liquide primaire. Après séchage et cuisson à très haute température, on observe un marquage à peine visible et ayant diffusé horizontalement sur la seconde zone sans liquide primaire, et un marquage de parfaite qualité sur la première zone.

Selon un troisième exemple, réalisé de la même façon que le précédent, avec comme liquide primaire, projeté par jet, une solution aqueuse d'un polymère acrylique soluble de pH 8, et comme encre soit une solution de cobalt à 25% dans l'éthanol soit une solution aqueuse d'acétate de cobalt à 25%. Les résultats observés après cuisson sont identiques aux résultats précédents.

Dans un quatrième exemple, on dépose sur une pièce de porcelaine préalablement séchée à un taux d'humidité très faible, une couche de liquide primaire composé d'une solution aqueuse à 20% de potasse puis un marquage d'une encre composée d'acétate de cobalt à 25% dans l'éthanol, de la même façon que dans le premier exemple. Après cuisson à 1200°C, on observe aucune différence de qualité de marquage entre la zone protégée par le liquide primaire et la zone non protégée, car l'encre ne s'est pas diluée dans la porcelaine sèche.

Ces exemples illustrent très nettement l'efficacité du procédé selon l'invention sur des céramiques contenant un fort pourcentage d'eau. Ce procédé présente tout son intérêt dans des applications où le marquage ou bien la décoration sont effectués le plus en amont possible de la chaîne de fabrication des produits en céramiques, c'est-à-dire lorsque les céramiques sont encore très humides. Il est bien entendu possible de réaliser le procédé avec une encre telle que décrite dans la demande de brevet français n° 91 06284 au nom de la Demanderesse. L'encre peut donc être une solution de sels de chrome, de cobalt, de fer, de manganèse, de zirconium dans un solvant. Ainsi le procédé selon l'invention permet de garantir la maîtrise totale de la qualité de fabrication de ces produits en céramiques.

## Revendications

1. Procédé de marquage et de décoration de céramiques humides par projection d'au moins un jet d'encre dont les composés responsables de la coloration après traitement thermique à haute température sont solubles dans l'eau, caractérisé en ce qu'il comporte les étapes suivantes :
- dépôt d'un liquide dit "primaire" sur la surface de la céramique humide à marquer, provoquant l'insolubilité, dans l'eau de la céramique, des composés de l'encre responsables de la coloration;
- dépôt, par projection sur la surface de la céramique recouverte du liquide primaire, de l'encre consistant en une solution d'au moins un sel minéral ou organo-métallique dans un solvant, ledit sel devenant insoluble dans l'eau de la céramique après son mélange avec le liquide primaire et formant au moins un oxyde coloré après chauffage à température élevée;
- séchage de la céramique imprimée;
- cuisson de la céramique séchée à température très élevée, supérieure à 300°C.

2. Procédé selon la revendication 1, caractérisé en ce que le liquide primaire est une solution basique et en ce que l'encre comporte au moins un sel minéral ou organo-métallique donnant par réaction chimique avec la solution basique, au moins un composé insoluble dans l'eau et formant un oxyde coloré après chauffage à des températures supérieures à 300°C.

3. Procédé selon la revendication 2, caractérisé en ce que le liquide primaire est une solution de potasse ou de soude dans un solvant.

4. Procédé selon la revendication 1, caractérisé en ce que le liquide primaire est une solution d'un polymère anionique soluble dans l'eau.

5. Procédé selon l'une des revendications précédentes, caractérisé en ce que l'encre est une solution de sels de chrome, de cobalt, de fer, de manganèse, de zirconium dans un solvant.

## Claims

1. Method for marking and decorating moist ceramics by spraying at least one jet of ink whose compounds responsible for colouring after heat treatment at high temperature are water soluble, characterised in that it includes the following steps:
- depositing a so-called "priming" liquid on the surface of the moist ceramic to be marked, making the compounds of the ink responsible for colouring insoluble in the water of the ceramic;
- depositing, by spraying onto the surface of the ceramic coated with the priming liquid, ink consisting of a solution of at least one mineral or organometallic salt in a solvent, the said salt becoming insoluble in the water of the ceramic after it has been mixed with the priming liquid and forming at least one coloured oxide after heating at a high temperature;
- drying the printed ceramic;
- firing the dried ceramic at a very high temperature, above 300°C.

2. Method according to Claim 1, characterised in that the priming liquid is a basic solution and in that the ink includes at least one mineral or organometallic salt giving, through a chemical reaction with the basic solution, at least one compound insoluble in water and forming a coloured oxide after it has been heated to temperatures above 300°C.

3. Method according to Claim 2, characterised in that the priming liquid is a solution of potash or soda in a solvent.

4. Method according to Claim 1, characterised in that the priming liquid is a solution of a water-soluble anionic polymer.

5. Method according to one of the preceding claims, characterised in that the ink is a solution of chromium, cobalt, iron, manganese or zirconium salts in a solvent.

## Patentansprüche

1. Verfahren zum Kennzeichnen und Dekorieren von feuchter Keramik durch Spritzen wenigstens eines Tintenstrahls, dessen für die Färbung nach der Wärmebehandlung bei hoher Temperatur verantwortlichen Bestandteile wasserlöslich sind, **dadurch gekennzeichnet**, **daß** es folgende Schritte umfaßt:
- Aufbringen einer als "primär" bezeichneten Flüssigkeit, die bewirkt, daß die für die Färbung verantwortlichen Bestandteile der Tinte im Wasser der Keramik unlöslich sind, auf die zu kennzeichnende feuchte Keramikoberfläche;
- Aufbringen der Tinte, die aus einer Lösung wenigstens eines mineralischen Salzes oder metallo-organischen Salzes in einem Lösungsmittel besteht, auf die mit der primären Flüssigkeit bedeckte Keramikoberfläche durch Spritzen, wobei das Salz im Wasser der Keramik nach seinem Mischen mit der primären Flüssigkeit unlöslich ist und nach dem Erhitzen auf eine erhöhte Temperatur wenigstens ein Farboxid bildet;
- Trocknen der bedruckten Keramik;
- Brennen der getrockneten Keramik bei sehr hoher Temperatur, bei mehr als 300°C.

2. Verfahren nach Anspruch 1, **dadurch gekennzeichnet, daß** die primäre Flüssigkeit eine basische Lösung ist und daß die Tinte wenigstens ein Mineralsalz oder ein metallo-organisches Salz enthält, welches bei einer chemischen Reaktion mit der basischen Lösung wenigstens einen wasserunlöslichen Bestandteil ergibt und nach dem Erhitzen auf eine Temperatur von mehr als 300°C ein Farboxid bildet.

3. Verfahren nach Anspruch 2, **dadurch gekennzeichnet, daß** die primäre Flüssigkeit eine Lösung von Kali oder Soda in einem Lösungsmittel ist.

4. Verfahren nach Anspruch 1, **dadurch gekennzeichnet, daß** die primäre Flüssigkeit eine Lösung eines wasserlöslichen anionischen Polymers ist.

5. Verfahren nach einem der vorhergehenden Ansprüche, **dadurch gekennzeichnet, daß** die Tinte eine Lösung von Chrom-, Kobalt-, Eisen-, Mangan-, Zirkoniumsalzen in einem Lösungsmittel ist.
